# EUROPEAN PATENT SPECIFICATION

(11) **EP 3 595 300 B1**
(45) Date of publication and mention of the grant of the patent: **18.08.2021**
(21) Application number: 17914005.8
(22) Date of filing: 16.06.2017
(51) Int. Cl.: H04N 17/04, H04N 17/00, H04N 21/258, H04N 21/442, G09G 3/34

(54) **VIDEO MONITORING METHOD, VIDEO MONITORING DEVICE, AND VIDEO MONITORING SYSTEM**
VIDEOÜBERWACHUNGSVERFAHREN, VIDEOÜBERWACHUNGSVORRICHTUNG UND VIDEOÜBERWACHUNGSSYSTEM
PROCÉDÉ DE SURVEILLANCE VIDÉO, DISPOSITIF DE SURVEILLANCE VIDÉO ET SYSTÈME DE SURVEILLANCE VIDÉO

(43) Date of publication of application: 15.01.2020
(60) Divisional application: 20195477.3
(73) Proprietor: Sharp NEC Display Solutions, Ltd., Tokyo 108-0073 (JP)
(72) Inventor: MORI, Noriaki, Tokyo 108-0073 (JP)
(74) Representative: Betten & Resch
(86) International application number: PCT/JP2017/022352
(87) International publication number: WO 2018/229974

(56) References cited:
- EP-A1- 2 214 334
- EP-A2- 2 023 328
- JP-A- 2001 067 119
- JP-A- 2009 017 443
- JP-A- 2012 235 420
- JP-A- 2013 115 521
- JP-U- 3 089 634
- US-A- 3 806 805

## Description

### TECHNICAL FIELD

The present invention relates to a video monitoring method, a video monitoring device, and a video monitoring system.

### BACKGROUND ART

Patent Document 1 discloses a constitution in which a camera is provided outside a display device, and by using the camera to capture and record advertising content displayed on the display device, confirms that the intended content is displayed as desired.

### [Prior Art Documents]

### [Patent Documents]

[Patent Document 1] Japanese Unexamined Patent Application, First Publication No. 2011-95804
EP 2 214 334 A1 discloses a device for measuring consumption patterns through the electric network and method for the use thereof, comprising a microcontroller/processing unit control block and another auxiliary device; a modulator/demodulator communications unit; a supply block, which transforms the available supply into the voltages (8) suitable for the operation of the device; and a measuring block for measuring the electric consumption on the line of the electric network, the conditioning of this measurement, comparison thereof, if necessary, with a predetermined consumption pattern, and the sending thereof to the communications block. A first example establishes a device for identifying the television programmes viewed on a television in order to measure audiences. A second example allows identifying the type of electric equipment associated with the electric line which allows compiling of statistics and subsequent studies.
US 3 806 805 A discloses that it has been found that a television receiver imposes on its main power supply a pattern of load variations which is representative of the program being received. A television audience measuring system is proposed comprising means responsive to variations in the mains supply to a plurality of consumers whereby to produce a correspondingly varying signal, a band-pass filter for detecting the variations of this signal which lie within a predetermined pass band within which variations caused by a tuned television receiver are known to lie, correlating means for correlating the filtered signal with a reference signal which varies in a manner characteristic of load variations imposed by a television receiver receiving a particular program, and comparing means for comparing the correlated and filtered signals to produce an output signal indicative of the television audience for a program to which the reference receiver is tuned.

EP 2 023 328 A2 discloses a display which includes a display module, a light source, a light source driving circuit, a display driving circuit, and an optical sensor. The optical sensor is installed next to the light source for detecting the luminance and color temperature of the light source. The optical sensor is coupled to the display driving circuit for generating a feedback signal (FB) to the display driving circuit according to the luminance and the color temperature of the light source. The display driving circuit drives the display module to display an image according to a received image signal (29) and updates the data of the image signal according to the feedback signal so as to adjust the luminance and the color temperature of the image.

### SUMMARY OF THE INVENTION

### Problem to be Solved by the Invention

However, in the constitution disclosed in Patent Document 1, it is necessary to secure a place for installing the camera outside, being separated a certain distance from the display device, and due to the camera being expensive, there is also the problem of the manufacturing cost of the system being increased.

The present invention has been made in view of the above circumstances, and has as its object to provide a video monitoring method, a video monitoring device, and a video monitoring system capable of monitoring the display state of content on a display device without installing a camera outside the display device.

### Means for Solving the Problem

The present invention is defined in the independent claims. The dependent claims define embodiments of the invention.

### Effect of the Invention

According to the present invention, it is possible to monitor the display state of content on a display device without installing a camera outside the display device.

### BRIEF DESCRIPTION OF THE DRAWINGS

FIG. 1 is a block diagram showing a configuration example of the video delivery system according to the exemplary embodiment of the present invention.
FIG 2 is a block diagram showing a configuration example of the display device according to the first exemplary embodiment of the present invention.
FIG. 3 is a flowchart showing an operation example of the display device 100 shown in FIG. 2.
FIG. 4 is a flowchart showing an operation example of the display device 100 shown in FIG. 2.
FIG. 5 is a flowchart showing an operation example of the display device 100 shown in FIG. 2.
FIG. 6 is a schematic diagram used for explaining an operation example of the display device 100 shown in FIG. 2.
FIG. 7 is a schematic diagram used for explaining an operation example of the display device 100 shown in FIG. 2.
FIG. 8 is a schematic diagram used for explaining an operation example of the display device 100 shown in FIG. 2.
FIG. 9 is a flowchart showing another operation example of the display device 100 shown in FIG. 2.
FIG. 10 is a block diagram showing a configuration example of the display device according to the second exemplary embodiment of the present invention.
FIG. 11 is a block diagram showing a configuration example of the display device according to the third exemplary embodiment of the present invention.
FIG. 12 is a flowchart showing a schematic basic configuration of the exemplary embodiments of the present invention.

### EMBODIMENTS FOR CARRYING OUT THE INVENTION

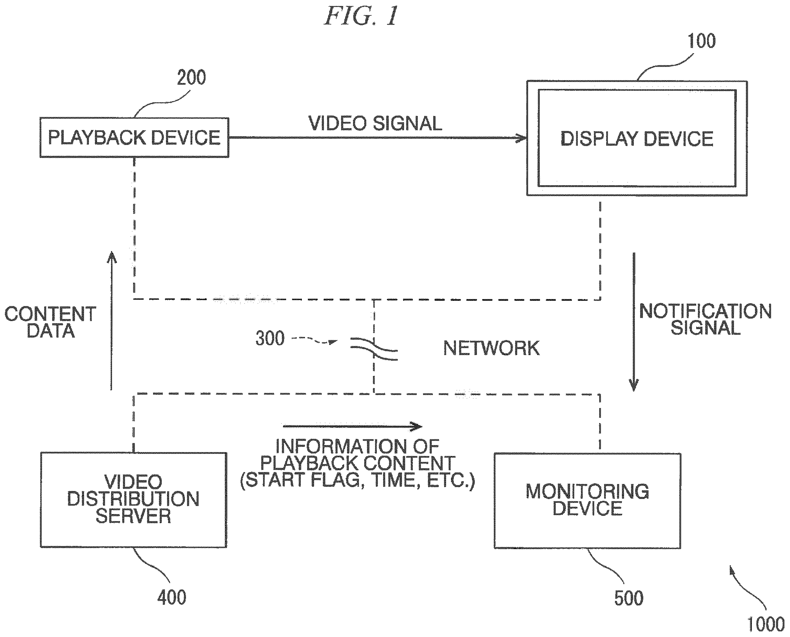

Hereinbelow, exemplary embodiments of the present invention will be described with reference to the drawings. FIG. 1 is a block diagram showing a configuration example of a video distribution system according to the first to third exemplary embodiments of the present invention. A video distribution system 1000 illustrated in FIG. 1 includes a display device 100, a playback device 200, a network 300, a video distribution server 400, and a monitoring device 500. In the video distribution system 1000 illustrated in FIG. 1, the playback device 200 receives content data from the video distribution server 400 via the network 300. Here, content data is information representing the content of a medium made up of images, sounds, characters, and the like. Further, the playback device 200 converts the received content data into a video signal and inputs the video signal to the display device 100. Note that the video distribution system 1000, the display device 100, and the monitoring device 500 all correspond to the video monitoring device of this exemplary embodiment.

The display device 100 displays an image based on the video signal input from the playback device 200. The display device 100 is a display device used for displaying predetermined content. In addition, the display device 100 transmits a notification signal indicating the result of monitoring the display state of the content on the display device 100 to the monitoring device 500 via the network 300 as described later. The monitoring device 500 receives the notification signal transmitted by the display device 100 and also receives information on the playback content from the video distribution server 400 via the network 300. The information on the playback content expresses a start flag indicating a start time of the content data distributed by the video distribution server 400, the display time of the content data, and the like. For example, the monitoring device 500 records or displays the received notification signal and information on the playback content in association with each other. In FIG. 1, the video signal may include information representing an image and information representing a sound. In that case, the video distribution system 1000 may additionally be provided with a device for playing back sound, and the display device 100 may include a device for playing back sound.

### (First Exemplary Embodiment)

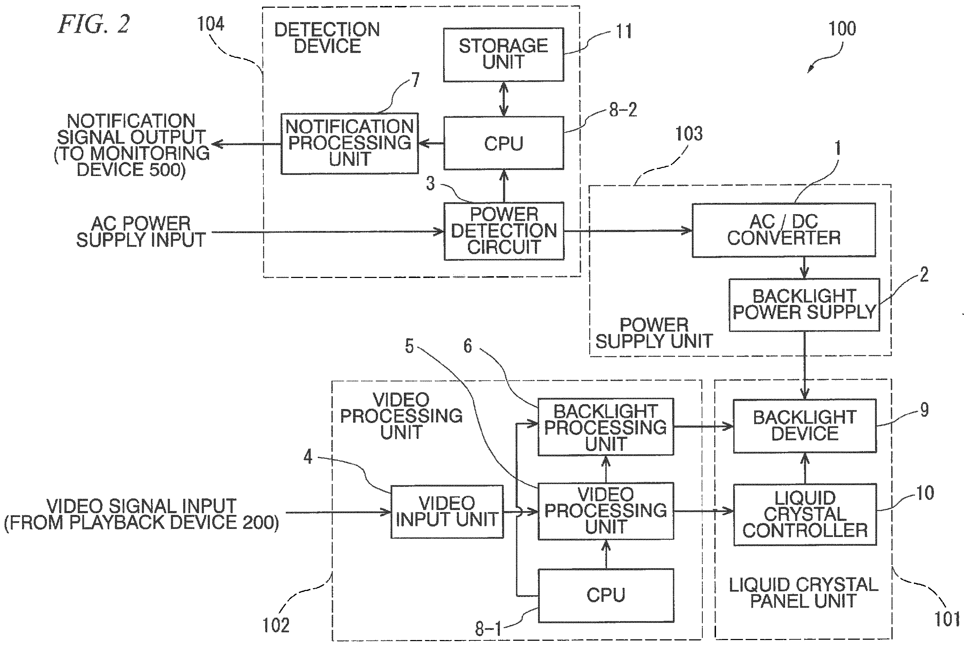

Next, a first exemplary embodiment of the display device 100 shown in FIG. 1 will be described with reference to FIGS. 2 to 9. FIG. 2 is a block diagram showing a configuration example of the display device 100 shown in FIG. 1 according to the first exemplary embodiment of the present invention. The display device 100 shown in FIG. 2 is provided with a liquid crystal panel unit 101, a video processing unit 102, a power supply unit 103, and a detection device 104. Note that the display device 100 is provided with a function of requesting the video distribution server 400 to distribute desired content via the playback device 200 and the network 300, for example, in accordance with a user instruction.

The liquid crystal panel unit 101 is provided with a backlight device 9 and a liquid crystal controller 10. The backlight device 9 is a backlight using, for example, an LED (light emitting diode) as a light source. Here, the backlight device 9 is an example of a backlight unit according to the present invention. The backlight device 9 controls the luminance of the backlight in accordance with a predetermined control signal input from the backlight processing unit 6 in the video processing unit 102, uniformly over the entire screen or divided into a plurality of areas. The liquid crystal controller 10 includes a liquid crystal panel, a drive control circuit for the liquid crystal panel, and the like. The liquid crystal controller 10 controls the aperture ratio of each pixel of the liquid crystal panel according to a predetermined video signal input from the video processing unit 5 in the video processing unit 102, and passes light emitted from the backlight device 9 to display an image. At that time, the control of the brightness of the backlight by the backlight device 9 and the control of the aperture ratio of the liquid crystal panel by the liquid crystal controller 10 are executed in cooperation. The electrical power consumed by the backlight accounts for a large part of the power consumption in the display device 100. The ratio of the maximum power consumed by the backlight to the power consumed by other circuits ranges from, for example, about 10:1 to several tens: 1.

The video processing unit 102 is provided with a video input unit 4, a video processing unit 5, a backlight processing unit 6, and a CPU (Central Processing Unit) 8-1. The video input unit 4 inputs the video signal output from the playback device 200 shown in FIG. 1, and after converting for example the signal format, outputs the converted signal to the video processing unit 5. The video processing unit 5 performs predetermined video processing on the video signal input from the video input unit 4, and outputs the processed video signal to the liquid crystal controller 10. The video processing unit 5 analyzes the contrast component of the video signal input from the video input unit 4 and outputs the result to the backlight processing unit 6.

The backlight processing unit 6 generates a predetermined control signal on the basis of the analysis result of the contrast component of the video signal input from the video processing unit 5 and sends the control signal to the backlight device 9 to change the brightness of the backlight of the liquid crystal panel. The liquid crystal controller 10 also sends a predetermined control signal to the backlight device 9 in accordance with the content of the input video signal, and adjusts the backlight according to the video signal.

The CPU 8-1 includes a ROM (Read Only Memory) and a RAM (Random Access Memory), and controls the video processing unit 5 and the backlight processing unit 6 by executing a predetermined program.

The power supply unit 103 includes an AC/DC (alternating current/direct current) converter 1 and a backlight power supply 2, and supplies predetermined direct current power to each part in the display device 100. The AC/DC converter 1 inputs AC commercial power via a power detection circuit 3 included in the detection device 104. The AC/DC converter 1 converts the input AC commercial power into a DC voltage required for the liquid crystal panel unit 101, the video processing unit 102, the power supply unit 103 that is a device itself, and the detection device 104. The backlight power supply 2 supplies predetermined direct-current power to the backlight device 9 using the output of the AC/DC converter 1 as a power source.

The detection device 104 is provided with the power detection circuit 3, a notification processing unit 7, a CPU 8-2, and a storage unit 11. Here, the detection device 104 is an example of a measuring device according to the present invention. The power detection circuit 3 detects the power supplied from the AC commercial power supply to the power supply unit 103, that is, the power consumption of the display device 100, and outputs a signal representing the detection result to the CPU 8-2. The power detection circuit 3 may detect the power by combining an ammeter and a voltmeter using a coil, for example, or may detect the current and the voltage and calculate the power from the product of the current and the voltage. When detecting the power consumption, the power detection circuit 3 may detect both the voltage and the current, or may detect only one of the current and the voltage. In the power detection circuit 3 (or a power detection circuit according to another exemplary embodiment to be described later), for example, when power is detected by a circuit of which the voltage is known, only the current needs to be detected. Further, for example, when power is calculated in a circuit in which a change in voltage and a change in current have a proportional relationship, one of the voltage and current need only be detected. The storage unit 11 stores reference information predetermined for each content displayed by the display device 100. The reference information is information representing the characteristic of each content that appears as a change in the operation state on the display device 100 when the display device 100 displays each content. The reference information is a comparison reference for a predetermined physical quantity detected by the display device 100. Further, the reference information may include time-series information with respect to the elapsed time during which the content is played back on the display device 100, or may include information that does not accompany the elapsed time. In the present exemplary embodiment, as the reference information, a reference value corresponding to power consumption determined in advance for each content displayed on the display device 100 is used. This reference value can be made a value indicating a voltage value or a current value in addition to power consumption.

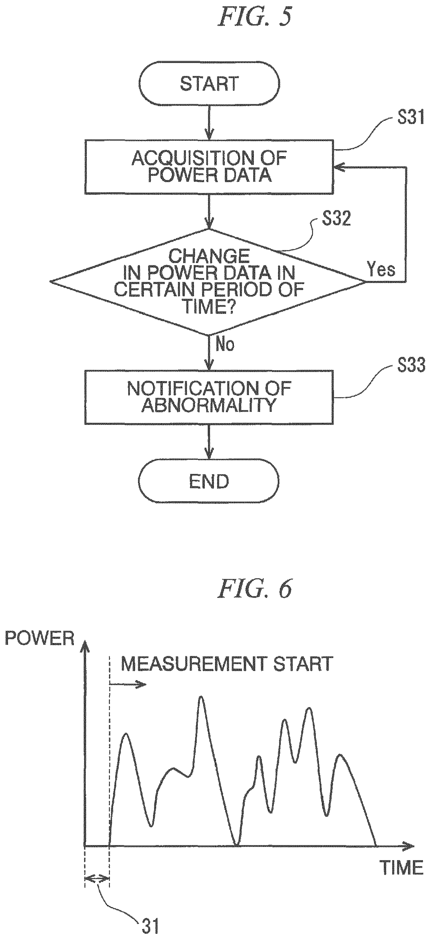

The reference value corresponding to the power consumption predetermined for each content is, for example, a standard value of power consumed by the display device 100 when a certain content is displayed on the display device 100. For example, as shown in FIG. 6, the power consumed by the display device 100 changes with time in accordance with the change in the power consumed by the backlight device 9 or the like according to the change in the luminance of the video. FIG. 6 shows a change over time of power consumed by the display device 100 when a certain content is displayed on the display device 100, with the horizontal axis representing time and the vertical axis representing power. The curve representing the change in power consumption over time as shown in FIG. 6 changes when the displayed content is different. That is, the standard value of the power consumed by the display device 100 differs for each content, and a different reference value can be set for each content.

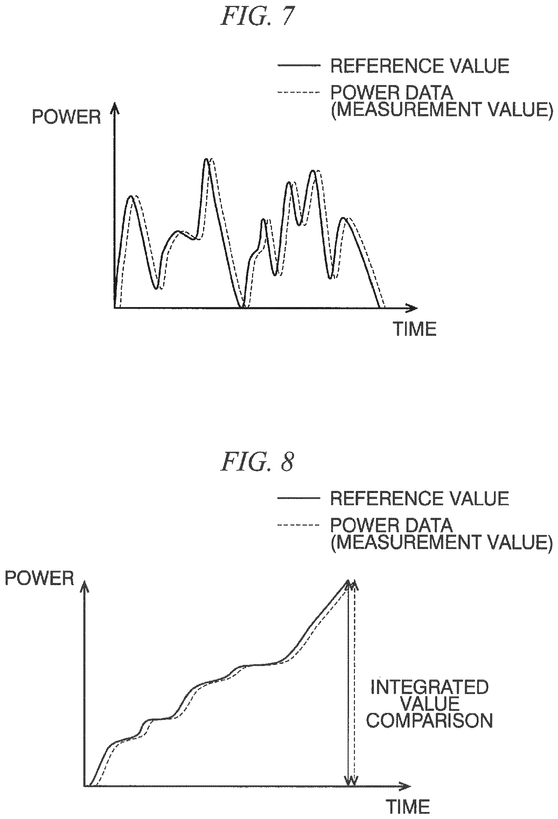

When the power consumption changes as shown for example in FIG. 6, the reference value can be made a value indicating the change over time of the power consumption as shown for example in FIG. 7. In this case, the reference value includes a plurality of values corresponding to power consumption at different elapsed times from the start of content display. Alternatively, when the power consumption similarly changes as shown in FIG. 6, the reference value can for example be made a value indicating the change over time of an integrated value of power consumption from a predetermined start time as shown in FIG. 8. However, the reference value may be one integrated value when the content has been played back, or may be a plurality of values representing changes in the integrated value with time. In this case, the reference value includes, for example, one or a plurality of values corresponding to the result of integration of power consumption according to the elapsed time from the start of content display.

When the reference value is made a value indicating the change over time of power consumption, although the number of data items constituting the reference value increases, it is possible to accurately determine whether the value is normal or abnormal, and possible to perform the determination in a short time in the case of abnormality. On the other hand, if the reference value is a value indicating a change over time of the integrated value of power consumption or an integrated value of total power consumption (the amount of power required to display one content), the number of data items constituting the reference value decreases, and since the number of times of performing a comparison process can be reduced, the processing load can be reduced.

The CPU 8-2 includes a ROM and a RAM, and by executing a predetermined program, performs recording of the power data detected by the power detection circuit 3, comparison of the reference value stored in the storage unit 11 with the power data, and processing such as determination based on the comparison result. Further, the CPU 8-2 may have, for example, a function of accepting an operation performed by a user on an operator such as a predetermined remote controller, a function of generating a reference value according to a user instruction, and the like. When determining whether or not a certain content is normally displayed, the CPU 8-2 compares the detection result of the power detection circuit 3 with a reference value stored in advance in the storage unit 11 as follows. That is, when the reference value is one including a plurality of time-series data representing power consumption at a predetermined sampling period as shown in FIG. 7, the CPU 8-2 compares the reference value and the detection result of the power detection circuit 3 as follows. That is, the CPU 8-2 compares the reference value and the detection result of the power detection circuit 3 at the sampling period or at a plurality of the sampling periods. When the reference value corresponds to the integrated value of power consumption as shown in FIG. 8, the CPU 8-2 compares the reference value with the detection result of the power detection circuit 3 as follows. That is, the CPU 8-2 integrates the detection result of the power detection circuit 3 at a predetermined sampling period, and at the sampling period or at a plurality of the sampling periods, or after a predetermined time has elapsed from the start of content display (or at the end of playback) compares the reference value and the integrated value of the detection result of the power detection circuit 3.

Further, in the comparison process described above, the CPU 8-2 determines that the content is normally displayed when the error between the reference value and the detection result of the power detection circuit 3 or the error between the reference value and the integrated value of the detection result is within a predetermined range. When the error is not within the predetermined range, the CPU 8-2 determines that the content is not normally displayed. It should be noted that the CPU 8-2 may determine whether or not content is display normally based on a single comparison result or based on a plurality of comparison results (for example, by majority decision). The CPU 8-2 records the determination result in the storage unit 11 and outputs the determination result to the notification processing unit 7. At that time, the CPU 8-2 may record or output all the determination results, or may record or output only some determination results (for example, when not normal). In addition, the CPU 8-2 may record or output a normal or abnormal determination result only once for each content, or record or output the number of times that the display was determined to be normal or the number of times the display was determined to be abnormal when the content is played back a plurality of times in a predetermined period.

The notification processing unit 7 transmits a notification signal indicating the determination result output by the CPU 8-2 to the monitoring device 500 via the network 300 shown in FIG. 1. Note that the notification processing unit 7 may have a function of receiving a predetermined control signal from the playback device 200, the video distribution server 400, the monitoring device 500, and the like via the network 300 shown in FIG. 1. The notification processing unit 7 may for example have a function of receiving a reference value for each content from the monitoring device 500, the video distribution server 400, and the like via the network 300 and storing the reference value in the storage unit 11. Further, the notification processing unit 7 may have a function of receiving, for example, playback content information (start flag, time, etc.) from the video distribution server 400 or the like via the network 300, and instructing the CPU 8-2 to execute processing to determine whether the content is normally displayed.

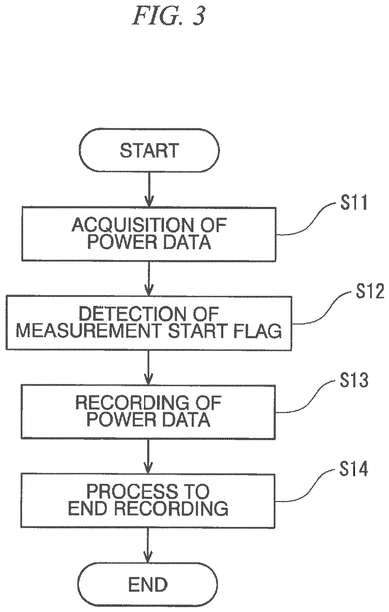

Next, an operation example of the display device 100 described with reference to FIGS. 1 and 2 will be described referring to FIG. 3. FIG. 3 is a flowchart illustrating an example of a process for generating a reference value for content in the display device 100. The process shown in FIG. 3 is started by, for example, the user performing a predetermined operation on a remote controller (not shown) to instruct the display device 100 to generate a reference value and to play back content that is the object of the generation. In this operation example, the content to be monitored includes, as a measurement start flag, video (black screen) during which, for example, power is minimized for several seconds at a start 31 as shown in FIG. 6.

In the process shown in FIG. 3, first, the CPU 8-2 of the detection device 104 starts the acquisition of power data at a predetermined sampling period (Step S11). Next, the CPU 8-2 stands by until a measurement start flag is detected on the basis of the acquired power data (that is, until a condition (predetermined condition) that the measurement start flag has been detected is satisfied) (Step S12). Upon detecting the measurement start flag, the CPU 8-2 acquires power data at the predetermined sampling period and starts a process of recording the acquired power data in the storage unit 11 (Step S13). In Step S13, the CPU 8-2 records the acquired power data in the storage unit 11 together with information indicating the elapsed time after detection of the measurement start flag. Alternatively, in Step S13, the CPU 8-2 records the time when the measurement start flag was detected in the storage unit 11, and records the acquired power data in the storage unit 11 together with information indicating the time of acquisition. This Step 13 is an example of a recording step according to the present invention. Next, for example, when the user performs a predetermined operation on a remote controller (not shown) instructing the end of the generation of the reference value, the CPU 8-2 ends the recording of the power data (Step S14). Further, the CPU 8-2 stores the recorded power data as a reference value or the integrated value of the recorded power data as a reference value, for example, in the storage unit 11 in association with the content identification information instructed by the user (Step S14).

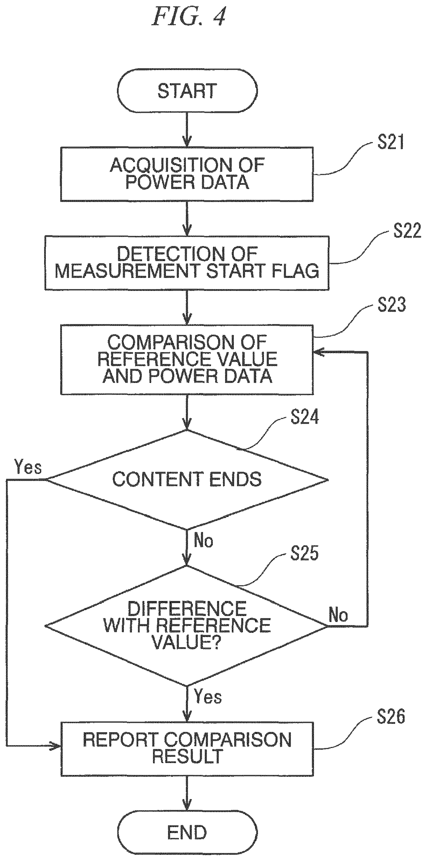

Next, with reference to FIG. 4, a description will be given for the process of monitoring whether or not content is normally played back on the display device 100. FIG. 4 is a flowchart illustrating an example of the monitoring process performed by the display device 100. In the process illustrated in FIG. 4, the monitoring device 500 transmits a signal instructing the display device 100 (detection device 104) to perform display monitoring of content to be distributed with the content identification information being attached thereto, the process being started when the detection device 104 (notification processing unit 7) has received the signal. In this operation example, the content to be monitored includes, as a measurement start flag, for example a video (black screen) during which, for example, power is minimized for several seconds at the start 31 as shown in FIG. 6. In this operation example, it is assumed that the reference value of the content is a time-series value of power data as illustrated in FIG. 7 and is stored in the storage unit 11.

In the process shown in FIG. 4, first, the CPU 8-2 of the detection device 104 starts acquiring power data at a predetermined sampling period (Step S21). Next, the CPU 8-2 stands by until detecting the measurement start flag based on the acquired power data (Step S22). Upon detecting the measurement start flag, the CPU 8-2 compares the acquired power data with a reference value at a predetermined sampling period (Step S23). Next, the CPU 8-2 determines whether or not the display of the content has ended (Step S24). If the content has not ended (No in Step S24), the CPU 8-2 determines whether or not there is a difference between the acquired power data and the reference value (Step S25). If there is no difference (No in Step S25), the CPU 8-2 compares the reference value with the power data in the next sampling period (Step S23). On the other hand, if there is a difference (Yes in Step S25), or if the display of the content had ended (Yes in Step S24), the CPU 8-2 reports a signal indicating the comparison result (notification signal) to the monitoring device 500 via the notification processing unit 7 (Step S26).

Next, with reference to FIG. 5, another process for monitoring whether or not the content is normally played back on the display device 100 will be described. FIG. 5 is a flowchart illustrating another example of the monitoring process performed by the display device 100. The process shown in FIG. 5 is executed at the time when a certain content is scheduled to be displayed on the display device 100 (detection device 104), for example.

In the process shown in FIG. 5, first, the CPU 8-2 of the detection device 104 starts acquiring power data at a predetermined sampling period (Step S31). Next, the CPU 8-2 determines whether or not the power data acquired in a certain period of time changed (Step S32). If there is a change (Yes in Step S32), the CPU 8-2 acquires power data at the next sampling period (Step S31). On the other hand, if there is no change (No in Step S32), the CPU 8-2 reports to the monitoring device 500 a signal indicating that the display on the display device 100 is abnormal (Step S33).

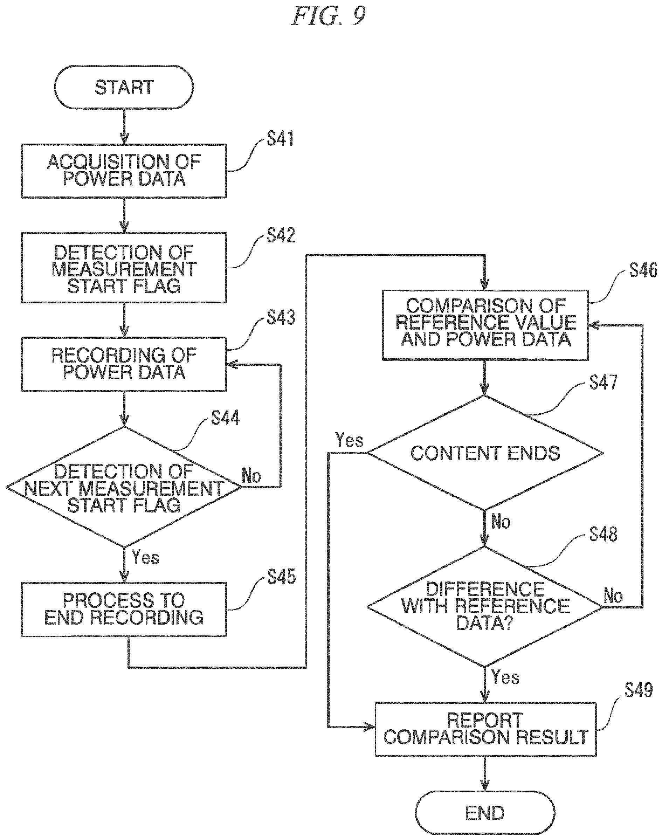

Next, another operation example of the display device 100 described with reference to FIGS. 1 and 2 will be described with reference to FIG. 9. FIG. 9 is a flowchart illustrating an example of the next process. That is, when the same content is continuously and repeatedly played back on the display device 100, the FIG. 9 shows an example of the process of generating the reference value in the first playback, and monitoring the display state using reference values generated in the second and subsequent playbacks. The processing shown in FIG. 9 is started by the user performing a predetermined operation on a remote controller (not shown), instructing the display device 100 to generate a reference value and commence the monitoring after the generation, and instructing the playback of the content to be monitored. In this operation example, the content to be monitored includes, as a measurement start flag, a video (black screen) during which, for example, the power is minimized for several seconds at the start 31 as shown in FIG. 6.

In the process shown in FIG. 9, first, the CPU 8-2 of the detection device 104 starts acquiring power data at a predetermined sampling period (Step S41). Next, the CPU 8-2 stands by until detecting the measurement start flag based on the acquired power data (Step S42). Upon detecting the measurement start flag, the CPU 8-2, at a predetermined sampling time, acquires power data and records the acquired power data in the storage unit 11 as a reference value (Step S43). Next, the CPU 8-2 determines whether or not the next measurement start flag is detected (Step S44). When the next measurement start flag is not detected (No in Step S44), the CPU 8-2, at a predetermined sampling time, acquires power data and records the acquired power data in the storage unit 11 as a reference value (Step S43). On the other hand, when the next measurement start flag is detected (Yes in Step S44), the CPU 8-2 ends the recording of the power data (Step S45).

Next, the CPU 8-2 acquires power data at a predetermined sampling time, and compares the acquired power data with a reference value (Step S46). Next, the CPU 8-2 determines whether or not the display of the content has ended (Step S47). If the content has not ended (No in Step S47), the CPU 8-2 determines whether or not there is a difference between the acquired power data and the reference value (Step S48). If there is no difference (No in Step S48), the CPU 8-2 acquires power data at a predetermined sampling time, and compares the acquired power data with the reference value (Step S46). On the other hand, if there is a difference (Yes in Step S48), or if the display of the content has ended (Yes in Step S47), the CPU 8-2 reports a signal indicating the comparison result (notification signal) to the monitoring device 500 via the notification processing unit 7 (Step S49).

As described above, in the present exemplary embodiment, the result of detecting the power consumed by the display device 100 (predetermined physical quantity), which indicates the operating state of the backlight device 9 (light emitting unit) that changes the luminance of the image displayed on the display device (display device) 100, and the reference value corresponding to power consumption determined in advance for each content displayed by the display device 100 are compared. In the present exemplary embodiment, it is possible to monitor whether or not a predetermined content has been normally played back based on the comparison result. Therefore, according to the present exemplary embodiment, it is possible to monitor the display state of content on the display device 100 without providing a camera outside the display device 100.

In the present invention, a light emitting unit that changes the luminance of the image displayed by the display device is not limited to a backlight device in a liquid crystal display (or a light emitting element such as an LED included in the backlight device). For example, in a display device using a self-luminous element such as an organic EL (organic electroluminescence) light emitting diode, the light emitting element constituting a pixel is an example of the light emitting unit of the present invention.

Further, a predetermined physical quantity indicating the operation state of the light emitting unit is not limited to the power consumed by the display device 100. The predetermined physical quantity indicating the operating state of the light emitting unit may be the luminance of the light emitting unit. In the case where the predetermined physical quantity is the luminance of the light emitting unit, for example, in the configuration shown in FIG. 2, the power detection circuit 3 may be replaced with a circuit that detects the luminance of the backlight device 9, and the reference value may be replaced with a value corresponding to the luminance.

In addition, this exemplary embodiment can for example be modified as follows.
(1) For example, the display device 100 shown in FIG. 1 may be provided with a plurality of display devices to constitute a multi-display that divides and displays one screen. In this case, a reference value may be set for each display device, and the display state of content may be monitored on all the display devices. Alternatively, a reference value may be set for one or a plurality of partial display devices, and the display state of the content may be monitored by the partial display devices.
(2) The content measurement start flag is not limited to a video (black screen) set at the start 31 during which the power is minimized. For example, a predetermined instruction transmitted from the monitoring device 500 or the video distribution server 400 to the display device 100 may be used as the measurement start flag. Alternatively, information indicating the start time of the target content may be transmitted from the monitoring device 500 or the video distribution server 400 to the display device 100 in advance, and the start time may be used as a measurement start flag. Alternatively, not only a black screen but an image of a fixed time having a pattern with a predetermined luminance change may be used as a measurement start flag. Further, a measurement start flag may be provided for each content, or provided for a plurality of contents gathered into one group. In this case, the reference value can for example be set so as to cover a plurality of contents.
(3) The method of generating the reference value is not limited to a method of generating the reference value by actually playing back the content on the display device 100. For example, the reference value can be generated by playing back the content using another display device of the same model as the display device 100. Alternatively, the reference value can be generated by playing back the content using another display device of the same type having the same power consumption change tendency as the display device 100. In this case, for example, the reference value can be calibrated in advance using a predetermined image, or can be calibrated using the value of an image at a predetermined playback time during display of the content.
(4) In the present exemplary embodiment, the comparison between the reference value and the measured power data or the integrated value of the power data is performed by the detection device 104, but the comparison between the detection result and the reference value may also be performed by another device (for example, the monitoring device 500 or the like). For example, the detection device 104 may notify another device of information indicating the detection result (information indicating the time-series detection value, the integrated value of the detection value, and the like), and the display state may be monitored by a comparison between the reference value and the detection result being performed by the other device.

### (Second Exemplary Embodiment)

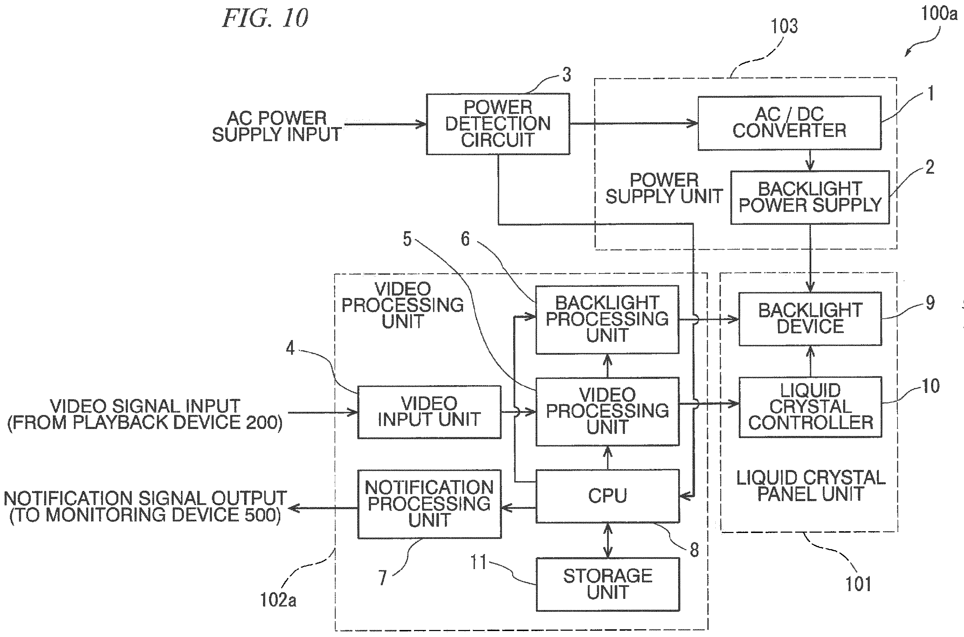

Next, a second exemplary embodiment of the display device 100 shown in FIG. 1 will be described with reference to FIG. 10. However, in FIG. 10, the constitution corresponding to the display device 100 shown in FIG. 1 is display device 100a. Also, in FIG. 10, the same reference numerals are given to the same constitutions or corresponding constitutions as those of the display device 100 of the first exemplary embodiment shown in FIG. 2. The display device 100a shown in FIG. 10 is provided with the liquid crystal panel unit 101, a video processing unit 102a, the power supply unit 103, and the power detection circuit 3.

The video processing unit 102a is provided with the video input unit 4, the video processing unit 5, the backlight processing unit 6, the notification processing unit 7, the CPU 8, and the storage unit 11. The CPU 8 has the functions of the CPU 8-1 and the CPU 8-2 of the first exemplary embodiment. That is, the CPU 8 controls the video processing unit 5 and controls the backlight processing unit 6. Further, the CPU 8 takes in the power data that is the detection result of the power detection circuit 3, stores the generated reference value in the storage unit 11, and transmits the comparison result between the reference value and the power data via the notification processing unit 7.

Also in the second exemplary embodiment, as in the first exemplary embodiment, the result of detecting the power (predetermined physical quantity) consumed by the display device 100a, which indicates the operating state of the backlight device 9 (light emitting unit) that changes the luminance of the image displayed by the display device (display device) 100a, is compared with a reference value corresponding to power consumption determined in advance for each content displayed by the display device 100a. In the present exemplary embodiment, it is possible to monitor whether or not a predetermined content has been normally played back on the basis of the comparison result. Therefore, according to the present exemplary embodiment, the display state of content on the display device 100a can be monitored without installing a camera outside the display device 100a.

### (Third Exemplary Embodiment)

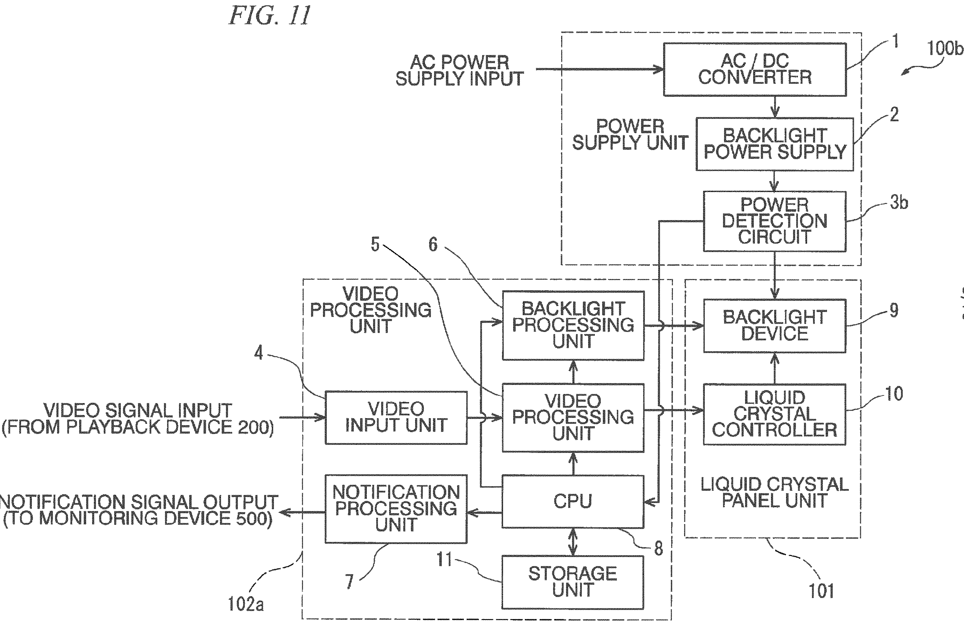

Next, a third exemplary embodiment of the display device 100 shown in FIG. 1 will be described with reference to FIG. 11. Note that in FIG. 11, the constitution corresponding to the display device 100 shown in FIG. 1 is a display device 100b. In FIG. 11, the same reference numerals are given to the same constitutions or corresponding constitutions as those of the display device 100a of the second exemplary embodiment shown in FIG. 10. The display device 100b shown in FIG. 11 is provided with a liquid crystal panel unit 101, a video processing unit 102a, and a power supply unit 103b.

The power supply unit 103b is provided with the AC/DC converter 1, the backlight power supply 2, and a power detection circuit 3b. The power detection circuit 3b detects the DC power supplied from the backlight power supply 2 to the backlight device 9 and outputs the detected result to the CPU 8. In the third exemplary embodiment, since the power consumed by the backlight device 9 (that is, part of the electrical power consumed by the display device 100b) is measured by the power detection circuit 3b, compared with other exemplary embodiments the comparison accuracy can be easily improved.

Also in the third exemplary embodiment, similarly to the first exemplary embodiment and the second exemplary embodiment, the result of detecting the electrical power (predetermined physical quantity) consumed by the display device 100b, which indicates the operating state of the backlight device 9 (light emitting unit) that changes the luminance of the image displayed by the display device (display device) 100b, is compared with a reference value corresponding to power consumption determined in advance for each content displayed by the display device 100b. In the present exemplary embodiment, it is possible to monitor whether or not a predetermined content has been normally played back on the basis of the comparison result. Therefore, according to the present exemplary embodiment, the display state of content on the display device 100b can be monitored without installing a camera outside the display device 100b.

### (Minimum configuration example of each exemplary embodiment)

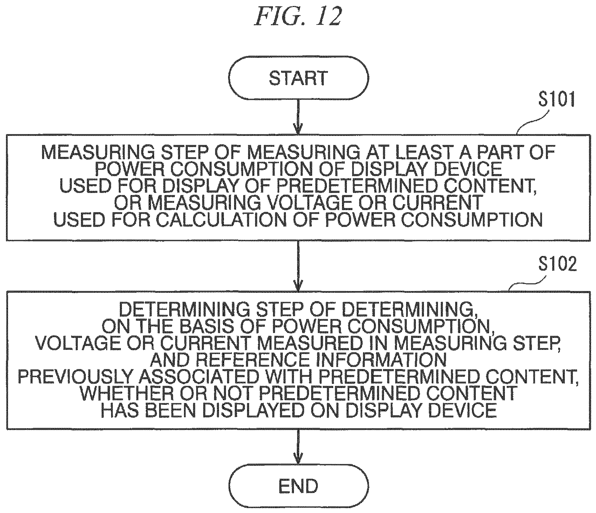

FIG. 12 is a diagram showing the minimum configuration of the video monitoring method. As shown in the figure, the video monitoring method may include at least steps S101 and S102. Here, Step S101 is a measuring step of measuring at least a part of the power consumption of the display device used for displaying predetermined content or measuring the voltage or current used for calculation of the power consumption. Step S102 is a determining step of determining, on the basis of the power consumption, voltage or current measured in the measuring step and reference information previously associated with the predetermined content, whether or not the predetermined content has been displayed on the display device.

In FIG 12, Step S101 and Step S102 may be configured as follows. That is, in a display device provided with a liquid crystal panel and a backlight unit and that is used for displaying predetermined content, Step S101 may be a measuring step of measuring the luminance of at least a part of light emitted by the backlight unit and irradiated on the liquid crystal panel. Step S102 may be a determining step of determining, on the basis of the luminance measured by the measuring step and the reference information previously associated with the predetermined content, whether or not the predetermined content has been displayed on the display device.

There may be another step of generating reference information on the basis of the luminance that is measured in a display device or another display device that displays a predetermined content. The reference information may include time-series information with respect to the elapsed time during which the predetermined content is played back. In the determining step, whether or not a predetermined content has been displayed on the display device may be determined on the basis of the result of a comparison between a plurality of reference values according to the elapsed time indicated by the time-series information and a plurality of luminances measured in the measuring step. Further, in the determining step, when a value corresponding to the integrated value of the luminance with respect to one playback time of the predetermined content is included in a predetermined range determined by the reference information, a determination may be made that the predetermined content has been displayed on the display device.

According to the exemplary embodiments and the minimum configuration example of the present invention as described above, it is possible to monitor the display state of content on a display device without providing a camera outside the display device.

Exemplary embodiments of the present invention have been described in detail with reference to the drawings. However, the specific configurations are not limited to these exemplary embodiments. In addition, a part or all of a program executed by a computer with one or a plurality of CPUs included in the above exemplary embodiments can be distributed via a communication line or a computer-readable recording medium.

### Reference Symbols

1000: Video distribution system
100, 100a, 100b: Display device
200: Playback device
300: Network
400: Video distribution server
500: Monitoring device
101: Liquid crystal panel unit
102, 102a: Video processing unit
103, 103b: Power supply unit
104: Detection device
1: AC/DC converter
2: Backlight power supply
3, 3b: Power detection circuit
4: Video input unit
5: Video processing unit
6: Backlight processing unit
7: Notification processing unit
8, 8-1, 8-2: CPU
9: Backlight device
10: Liquid crystal controller
11: Storage unit

## Claims

1. A video monitoring method comprising:
a measuring step of measuring at least a part of power consumption of a display device used for displaying predetermined content, or a voltage or a current used for calculating the part of power consumption, the display device comprising a light emitting unit that produces and emits backlight that is irradiated on a liquid crystal panel of the display device, the part of power consumption being power consumption of the light emitting unit; and
a determining step of determining whether a predetermined content has been displayed by the display device, based on any of the power consumption, the voltage or the current measured in the measuring step, and reference information previously associated with the predetermined content.

2. The video monitoring method according to claim 1, further comprising:
a step of generating the reference information based on at least the part of power consumption of the display device or another display device that displayed the predetermined content, or a voltage or a current used for calculating the power consumption.

3. The video monitoring method according to claim 1 or claim 2, wherein the determining step determines that the predetermined content has been displayed by the display device in a case where an integrated value of the power consumption or of the current with respect to one playback time of the predetermined content is included in a predetermined range determined by the reference information.

4. The video monitoring method according to any one of claims 1 to 3, further comprising:
a recording step of, when a predetermined condition has been satisfied, recording: any of the power consumption, the voltage or the current measured by the measuring step; and an elapsed time since the predetermined condition was satisfied or a time of day.

5. The video monitoring method according to claim 4, wherein the predetermined condition is a condition of the power consumption measured by the measuring step.

6. The video monitoring method according to any one of claims 1 to 5, wherein the measuring step is performed by a measuring device connected to a network.

7. The video monitoring method according to any one of claims 1 to 6, wherein the measuring step is repeated in a predetermined period.

8. A video monitoring method comprising:
a measuring step of measuring, by a display device that comprises a liquid crystal panel and a backlight unit and that is used for displaying predetermined content, luminance of at least a part of light emitted by the backlight unit and irradiated on the liquid crystal panel; and
a determining step of determining whether a predetermined content has been displayed by the display device based on the luminance measured by the measuring step and reference information previously associated with the predetermined content.

9. The video monitoring method according to claim 8, further comprising:
a step of generating the reference information based on luminance measured in the display device or another display device that displayed the predetermined content.

10. The video monitoring method according to any one of claims 1, 2, 4 to 7, 8, or 9, wherein the reference information comprises time-series information with respect to an elapsed time during which the predetermined content is played back.

11. The video monitoring method according to claim 10, wherein the determining step determines whether the predetermined content has been displayed by the display device based on a result of a comparison between a plurality of reference values according to the elapsed time indicated by the time-series information and a plurality of power consumption values measured by the measuring step.

12. The video monitoring method according to claim 8 or 9, wherein the determining step determines that the predetermined content has been displayed by the display device in a case where a value corresponding to an integrated value of the luminance with respect to one playback time of the predetermined content is included in a predetermined range determined by the reference information.

13. A video monitoring device comprising means adapted to determine whether a predetermined content has been displayed by a display device comprising a light emitting unit that produces and emits backlight that is used for display and that irradiates a liquid crystal panel of the display device based on at least a part of power consumption of the display device used for displaying the predetermined content and reference information previously associated with the predetermined content, the part of power consumption being power consumption of the light emitting unit.

14. A video monitoring device comprising:
determining means adapted to determine whether a predetermined content has been displayed by a display device that comprises a liquid crystal panel and a backlight unit and that is used for displaying predetermined content, based on luminance of at least a part of light emitted by the backlight unit and irradiated on the liquid crystal panel and reference information previously associated with the predetermined content.

15. A video monitoring system comprising:
the video monitoring device according to claim 13,
a measuring device adapted to measure at least the part of power consumption or a voltage or a current used for calculating the part of power consumption; and
wherein the monitoring device receives a signal from the measuring device via a network., and
the video monitoring device determines whether the predetermined content has been displayed by the display device, based on any of the power consumption, the voltage or the current, and the reference information.

16. A video monitoring system comprising:
the video monitoring device according to claim 14,
a measuring device adapted for measuring the luminance; and
wherein the video monitoring device receives a signal from the measuring device via a network, and
the video monitoring device determines whether the predetermined content has been displayed by the display device based on the luminance measured by the measuring device and the reference information.

## Patentansprüche

1. Videoüberwachungsverfahren, umfassend:
einen Messschritt zum Messen mindestens eines Teils des Energieverbrauchs einer Anzeigevorrichtung, die zum Anzeigen eines vorbestimmten Inhalts verwendet wird, oder einer Spannung oder eines Stroms, die zum Berechnen des Teils des Energieverbrauchs verwendet werden, wobei die Anzeigevorrichtung eine lichtemittierende Einheit umfasst, die Hintergrundlicht erzeugt und emittiert, das auf ein Flüssigkristallpanel der Anzeigevorrichtung gestrahlt wird, wobei der Teil des Energieverbrauchs der Energieverbrauch der lichtemittierenden Einheit ist; und
einen Bestimmungsschritt des Bestimmens, ob ein vorbestimmter Inhalt durch die Anzeigevorrichtung angezeigt worden ist, basierend auf irgendeiner der Leistungsaufnahme, der Spannung oder des Stroms, die in dem Messschritt gemessen wurden, und Referenzinformationen, die vorher mit dem vorbestimmten Inhalt assoziiert wurden.

2. Das Videoüberwachungsverfahren nach Anspruch 1, ferner umfassend
einen Schritt des Erzeugens der Referenzinformationen auf der Grundlage mindestens des Teils der Leistungsaufnahme der Anzeigevorrichtung oder einer anderen Anzeigevorrichtung, die den vorbestimmten Inhalt angezeigt hat, oder einer Spannung oder eines Stroms, die zur Berechnung der Leistungsaufnahme verwendet werden.

3. Videoüberwachungsverfahren nach Anspruch 1 oder Anspruch 2, wobei der Bestimmungsschritt bestimmt, dass der vorbestimmte Inhalt durch die Anzeigevorrichtung angezeigt, für den Fall, dass ein integrierter Wert der Leistungsaufnahme oder des Stroms in Bezug auf eine Wiedergabezeit des vorbestimmten Inhalts in einem vorbestimmten Bereich enthalten ist, der durch die Referenzinformation bestimmt wird.

4. Das Videoüberwachungsverfahren nach einem der Ansprüche 1 bis 3, ferner umfassend:
einen Aufzeichnungsschritt, bei dem, wenn eine vorbestimmte Bedingung erfüllt wurde, aufgezeichnet wird: entweder die Leistungsaufnahme, die Spannung oder der Strom, die durch den Messschritt gemessen wurden; und eine verstrichene Zeit, seit die vorbestimmte Bedingung erfüllt wurde, oder eine Tageszeit.

5. Videoüberwachungsverfahren nach Anspruch 4, wobei die vorbestimmte Bedingung eine Bedingung des durch den Messschritt gemessenen Stromverbrauchs ist.

6. Videoüberwachungsverfahren nach einem der Ansprüche 1 bis 5, wobei der Messschritt von einem an ein Netzwerk angeschlossenen Messgerät durchgeführt wird.

7. Videoüberwachungsverfahren nach einem der Ansprüche 1 bis 6, wobei der Messschritt in einem vorgegebenen Zeitraum wiederholt wird.

8. Videoüberwachungsverfahren, umfassend:
einen Messschritt zum Messen der Luminanz mindestens eines Teils des von der Hintergrundbeleuchtungseinheit emittierten und auf das Flüssigkristallpanel gestrahlten Lichts durch eine Anzeigevorrichtung, die ein Flüssigkristallpanel und eine Hintergrundbeleuchtungseinheit umfasst und die zum Anzeigen eines vorbestimmten Inhalts verwendet wird; und
einen Bestimmungsschritt des Bestimmens, ob ein vorbestimmter Inhalt durch die Anzeigevorrichtung angezeigt wurde, basierend auf der durch den Messschritt gemessenen Luminanz und Referenzinformationen, die zuvor mit dem vorbestimmten Inhalt assoziiert wurden.

9. Videoüberwachungsverfahren nach Anspruch 8, ferner umfassend
einen Schritt des Erzeugens der Referenzinformation auf der Grundlage der in der Anzeigevorrichtung oder einer anderen Anzeigevorrichtung, die den vorbestimmten Inhalt angezeigt hat, gemessenen Luminanz.

10. Videoüberwachungsverfahren nach einem der Ansprüche 1, 2, 4 bis 7, 8 oder 9, wobei die Referenzinformationen Zeitreiheninformationen in Bezug auf eine verstrichene Zeit, während der der vorbestimmte Inhalt wiedergegeben wird, umfassen.

11. Videoüberwachungsverfahren nach Anspruch 10, wobei der Bestimmungsschritt bestimmt, ob der vorbestimmte Inhalt von der Anzeigevorrichtung angezeigt wurde, basierend auf einem Ergebnis eines Vergleichs zwischen einer Mehrzahl von Referenzwerten gemäß der verstrichenen Zeit, die durch die Zeitreiheninformation angezeigt wird, und einer Mehrzahl von Leistungsverbrauchswerten, die durch den Messschritt gemessen werden.

12. Videoüberwachungsverfahren nach Anspruch 8 oder 9, wobei der Bestimmungsschritt bestimmt, dass der vorbestimmte Inhalt von der Anzeigevorrichtung wurde, für den Fall, dass ein Wert, der einem integrierten Wert der Luminanz in Bezug auf eine Wiedergabezeit des vorbestimmten Inhalts entspricht, in einem vorbestimmten Bereich enthalten ist, der durch die Referenzinformationen bestimmt wird.

13. Videoüberwachungsvorrichtung mit Mitteln, die geeignet sind, zu bestimmen, ob ein vorbestimmter Inhalt von einer Anzeigevorrichtung angezeigt wurde, die eine lichtemittierende Einheit umfasst, die Hintergrundlicht erzeugt und emittiert, das für die Anzeige verwendet wird und das eine Flüssigkristalltafel der Anzeigevorrichtung bestrahlt, basierend auf mindestens einem Teil des Energieverbrauchs der Anzeigevorrichtung, der für die Anzeige des vorbestimmten Inhalts verwendet wird, und auf Referenzinformationen, die zuvor mit dem vorbestimmten Inhalt assoziiert wurden, wobei der Teil des Energieverbrauchs der Energieverbrauch der lichtemittierenden Einheit ist.

14. Eine Videoüberwachungsvorrichtung mit:
Bestimmungsmitteln, die angepasst sind, um zu bestimmen, ob ein vorbestimmter Inhalt durch eine Anzeigevorrichtung angezeigt wurde, die eine Flüssigkristalltafel und eine Hintergrundbeleuchtungseinheit umfasst und die zum Anzeigen eines vorbestimmten Inhalts verwendet wird, basierend auf der Luminanz von mindestens einem Teil des Lichts, das von der Hintergrundbeleuchtungseinheit emittiert und auf die Flüssigkristalltafel gestrahlt wird, und auf Referenzinformationen, die zuvor dem vorbestimmten Inhalt zugeordnet wurden.

15. Videoüberwachungssystem, umfassend
die Videoüberwachungseinrichtung nach Anspruch 13,
eine Messvorrichtung, die angepasst ist, um zumindest den Teil der Leistungsaufnahme oder eine Spannung oder einen Strom zu messen, der zur Berechnung des Teils der Leistungsaufnahme verwendet wird; und
wobei die Überwachungsvorrichtung ein Signal von der Messvorrichtung über ein Netzwerk empfängt, und
die Videoüberwachungsvorrichtung bestimmt, ob der vorbestimmte Inhalt von der Anzeigevorrichtung angezeigt wurde, basierend auf irgendeiner der Leistungsaufnahme, der Spannung oder des Stroms und der Referenzinformation.

16. Videoüberwachungssystem, umfassend:
die Videoüberwachungsvorrichtung nach Anspruch 14,
eine Messvorrichtung, die zum Messen der Leuchtdichte angepasst ist; und
wobei die Videoüberwachungsvorrichtung ein Signal von der Messvorrichtung über ein Netzwerk empfängt, und
die Videoüberwachungsvorrichtung bestimmt, ob der vorbestimmte Inhalt von der Anzeigevorrichtung angezeigt wurde, basierend auf der von der Messvorrichtung gemessenen Luminanz und der Referenzinformation.

## Revendications

1. Procédé de surveillance vidéo comprenant :
une étape de mesure pour mesurer au moins une partie de consommation de puissance d'un dispositif d'affichage utilisé pour afficher un contenu prédéterminé, ou une tension ou un courant utilisé(e) pour calculer la partie de consommation de puissance, le dispositif d'affichage comprenant une unité électroluminescente qui produit et émet un rétroéclairage qui est irradié sur un panneau à cristaux liquides du dispositif d'affichage, la partie de consommation de puissance étant une consommation de puissance de l'unité électroluminescente ; et
une étape de détermination pour déterminer si un contenu prédéterminé a été affiché par le dispositif d'affichage, sur la base de l'un(e) de la consommation de puissance, de la tension ou du courant mesuré(e) lors de l'étape de mesure, et d'informations de référence préalablement associées au contenu prédéterminé.

2. Procédé de surveillance vidéo selon la revendication 1, comprenant en outre :
une étape de génération des informations de référence sur la base d'au moins la partie de consommation de puissance du dispositif d'affichage ou d'un autre dispositif d'affichage qui a affiché le contenu prédéterminé, ou une tension ou un courant utilisé(e) pour calculer la consommation de puissance.

3. Procédé de surveillance vidéo selon la revendication 1 ou 2, dans lequel l'étape de détermination détermine que le contenu prédéterminé a été affiché par le dispositif d'affichage dans un cas où une valeur intégrée de la consommation de puissance ou du courant par rapport à un temps de lecture du contenu prédéterminé est incluse dans une plage prédéterminée déterminée par les informations de référence.

4. Procédé de surveillance vidéo selon l'une quelconque des revendications 1 à 3, comprenant en outre :
une étape d'enregistrement, lorsqu'une condition prédéterminée a été satisfaite, pour enregistrer : l'un(e) de la consommation de puissance, de la tension ou du courant mesuré(e) par l'étape de mesure ; et un temps écoulé depuis que la condition prédéterminée a été satisfaite ou une heure de la journée.

5. Procédé de surveillance vidéo selon la revendication 4, dans lequel la condition prédéterminée est une condition de la consommation de puissance mesurée par l'étape de mesure.

6. Procédé de surveillance vidéo selon l'une quelconque des revendications 1 à 5, dans lequel l'étape de mesure est réalisée par un dispositif de mesure connecté à un réseau.

7. Procédé de surveillance vidéo selon l'une quelconque des revendications 1 à 6, dans lequel l'étape de mesure est répétée dans une période prédéterminée.

8. Procédé de surveillance vidéo comprenant :
une étape de mesure pour mesurer, par un dispositif d'affichage qui comprend un panneau à cristaux liquides et une unité de rétroéclairage et qui est utilisé pour afficher un contenu prédéterminé, la luminance d'au moins une partie de la lumière émise par l'unité de rétroéclairage et irradiée sur le panneau à cristaux liquides ; et
une étape de détermination pour déterminer si un contenu prédéterminé a été affiché par le dispositif d'affichage sur la base de la luminance mesurée par l'étape de mesure et des informations de référence précédemment associées au contenu prédéterminé.

9. Procédé de surveillance vidéo selon la revendication 8, comprenant en outre :
une étape de génération des informations de référence sur la base de la luminance mesurée dans le dispositif d'affichage ou un autre dispositif d'affichage qui a affiché le contenu prédéterminé.

10. Procédé de surveillance vidéo selon l'une quelconque des revendications 1, 2, 4 à 7, 8 ou 9, dans lequel les informations de référence comprennent des informations de série temporelle par rapport à un temps écoulé pendant lequel le contenu prédéterminé est lu.

11. Procédé de surveillance vidéo selon la revendication 10, dans lequel l'étape de détermination détermine si le contenu prédéterminé a été affiché par le dispositif d'affichage sur la base d'un résultat d'une comparaison entre une pluralité de valeurs de référence en fonction du temps écoulé indiqué par les informations de série temporelle et une pluralité de valeurs de consommation de puissance mesurées par l'étape de mesure.

12. Procédé de surveillance vidéo selon la revendication 8 ou 9, dans lequel l'étape de détermination détermine que le contenu prédéterminé a été affiché par le dispositif d'affichage dans le cas où une valeur correspondant à une valeur intégrée de la luminance par rapport à un temps de lecture du contenu prédéterminé est incluse dans une plage prédéterminée déterminée par les informations de référence.

13. Dispositif de surveillance vidéo comprenant des moyens adaptés pour déterminer si un contenu prédéterminé a été affiché par un dispositif d'affichage comprenant une unité électroluminescente qui produit et émet un rétroéclairage qui est utilisé pour l'affichage et qui irradie un panneau à cristaux liquides du dispositif d'affichage sur la base d'au moins une partie de consommation de puissance du dispositif d'affichage utilisé pour afficher le contenu prédéterminé et d'informations de référence précédemment associées au contenu prédéterminé, la partie de consommation de puissance étant une consommation de puissance de l'unité électroluminescente.

14. Dispositif de surveillance vidéo comprenant :
des moyens de détermination adaptés pour déterminer si un contenu prédéterminé a été affiché par un dispositif d'affichage qui comprend un panneau à cristaux liquides et une unité de rétroéclairage et qui est utilisé pour afficher un contenu prédéterminé, sur la base d'une luminance d'au moins une partie de la lumière émise par l'unité de rétroéclairage et irradiée sur le panneau à cristaux liquides et d'informations de référence préalablement associées au contenu prédéterminé.

15. Système de surveillance vidéo comprenant :
le dispositif de surveillance vidéo selon la revendication 13,
un dispositif de mesure adapté pour mesurer au moins la partie de consommation de puissance ou une tension ou un courant utilisé(e) pour calculer la partie de consommation de puissance ; et
dans lequel le dispositif de surveillance reçoit un signal à partir du dispositif de mesure via un réseau, et
le dispositif de surveillance vidéo détermine si le contenu prédéterminé a été affiché par le dispositif d'affichage, sur la base de l'un(e) de la consommation de puissance, de la tension ou du courant, et des informations de référence.

16. Système de surveillance vidéo comprenant :
le dispositif de surveillance vidéo selon la revendication 14,
un dispositif de mesure adapté pour mesurer la luminance ; et
dans lequel le dispositif de surveillance vidéo reçoit un signal à partir du dispositif de mesure via un réseau, et
le dispositif de surveillance vidéo détermine si le contenu prédéterminé a été affiché par le dispositif d'affichage sur la base de la luminance mesurée par le dispositif de mesure et des informations de référence.
